# EUROPEAN PATENT SPECIFICATION

(11) **EP 2 065 551 B1**
(45) Date of publication and mention of the grant of the patent: **25.06.2014**
(21) Application number: 08158219.9
(22) Date of filing: 13.06.2008
(51) Int. Cl.: F16L 11/08, G01L 1/24, E21B 47/12, E21B 17/01, E21B 17/20, F16L 11/12

(54) **Flexible pipe**
Biegsames Rohr
Tuyau flexible

(30) Priority: 26.11.2007 US 990129 P
(43) Date of publication of application: 03.06.2009
(60) Divisional application: 12153855.7
(73) Proprietor: Schlumberger Holdings Limited (GB),, Tortola (GR)
(72) Inventor: Roberts, Richard Damon Goodman, Southampton, Hampshire SO31 4RA (GB); Vannuffelen, Stephane, Southampton, Hampshire SO31 4RA (GB); Smith, Russell, Southampton, Hampshire SO31 4RA (GB)
(74) Representative: Bonner, Catherine Louise

(56) References cited:
- WO-A-2004/081509
- WO-A-2008/077410
- WO-A-2008/125807
- US-A1- 2002 007 945
- US-A1- 2002 119 271
- US-A1- 2003 075 361

## Description

This invention relates to a flexible pipe and to a method of manufacturing a flexible pipe.

Flexible pipes are used as umbilical lines, risers, flow lines and offload lines in offshore hydrocarbon production. The complexity of the flexible pipes used in offshore oil and gas production is increasing in order to satisfy the many requirements of such pipes in terms of thermal behaviour, geometry, multiple fluid flows, flexibility and mechanical characteristics. Flexible pipes typically comprise at least a polymer inner liner which provides fluid isolation and a tension armour layer, provided around the liner, which provides protection against axial tensile stresses applied to the pipe. When further strength is required flexible pipes generally additionally comprise one or more additional layers, namely: a flexible carcass layer provided inside the inner liner and which defines a bore for receiving production components and prevents collapse of the inner liner; a pressure vault (or pressure armour) layer provided between the inner liner and the tension armour layer which gives the pipe additional strength against internal pressure and radial loads; additional tension armour layers; and a polymer outer sheath which provides environmental protection for the structural layers of the pipe.

Although the flexibility of the pipes helps to reduce stresses due to movement, they are susceptible to deterioration and/or rupture during transport, deployment and operation. It is therefore desirable to monitor the structural integrity of flexible pipes to prevent failure due to fatigue, corrosion, erosion or blockage due to deposition of parts of the flow components moving through the pipes.

It can also be desirable to measure one or more downhole parameters of interest during the drilling of oilwell wellbores. As described in US2002/0007945 and US2003/0075361, this may be achieved by providing a plurality of spaced apart sensor elements on a fibre optic string which is affixed to an internal wall of a composite coiled tubing used as the conveying device for one or more downhole tools.

According to a first aspect of the present invention there is provided a flexible pipe comprising:
a polymer inner liner
a tension armour layer surrounding the polymer inner liner; and
an outer sheath layer surrounding the tension armour layer;
characterised by further comprising an optical fibre sensor coupled to the polymer inner liner.

The invention thus provides a flexible pipe having an integral strain and/or temperature sensor which does not affect the structural characteristics of the flexible pipeline and which is a passive sensor, and thus safe to use in connection with oil and gas pipelines. Structural characteristics of the flexible pipe can thereby be monitored by measuring changes in one or more of axial strain, hoop strain, torsion and temperature within the respective layer, due to changes in pipe diameter, due for example to changes in fluid pressure within the pipe, pipe bending, leaks within a layer, vibrations within the pipe, due for example to leaks within the polymer inner liner or shock vibrations caused when fishing nets become entangled with a pipe, and changes in the temperature of the fluid within the pipe. Deterioration of the polymer material and/or leaks in the polymer inner liner may be detected due to localised temperature increases in the area of a leak or deterioration caused by decompression of gas as it migrates from the inside to the outside of the polymer inner liner.

The flexible pipe preferably further comprises a pressure armour layer between the inner liner layer and the tension armour layer and the optical fibre sensor is coupled to at least one of the polymer inner liner and the pressure armour layer.

One or more optical fibre sensors may additionally be coupled to the tension armour layer. The or each optical fibre sensor may be provided generally axially along a wire of the tension armour layer or where the optical fibre sensor is provided within a sensor carrier rod, the sensor carrier rod may replace a wire of the tension armour layer.

There is described in an embodiment a flexible pipe comprising a pressure armour layer and an optical fibre sensor coupled to the pressure armour layer.

Providing an optical fibre sensor in the pressure armour layer enables hoop strain within the pressure armour layer to be detected, which is directly related to the internal pressure within the pipe; changes in pipe diameter are indicative of changes in the pressure within the pipe and are detected as changes in the hoop strain within the pipe. The internal pressure within the pipe can thereby be monitored by providing an optical fibre sensor within the pressure armour layer.

The or each optical fibre sensor may be coupled to the respective layer by being provided on the surface of the layer or being embedded within the layer.

Preferably, a plurality of optical fibre sensors are coupled to one or more of the said layers.

The or each optical fibre sensor may comprise an optical fibre adapted for distributed semi-distributed or multi-point strain sensing. Where the or each optical fibre sensor is adapted for distributed strain sensing it is preferably adapted for distributed sensing by Brillouin scattering.

The or each optical fibre sensor may comprise an optical fibre alternatively or additionally adapted for distributed semi-distributed or multi-point temperature sensing. Where the or each optical fibre sensor is adapted for distributed temperature sensing it is preferably adapted for distributed sensing by Brillouin scattering or Rayleigh scattering measurement.

Where the or each optical fibre sensor is adapted for semi-distributed or multi-point strain or temperature sensing, it preferably comprises an optical fibre having an array of fibre grating sensors provided therein. The fibre grating sensors are preferably fibre Bragg gratings.

The or each optical fibre may extend generally straight along the axial length of the flexible pipe. The or each optical fibre may alternatively extend helically around the pipe. The or each optical fibre may extend helically around the pipe with a substantially constant pitch or the pitch may vary along the length of the fibre.

The or each optical fibre sensor may alternatively comprise a sensing section of an optical fibre, the sensing section of the fibre being helically wound around the pipe. Where a plurality of optical fibre sensors are provided, the sensing sections may be provided within a single optical fibre having generally straight or lower pitch interconnecting sections therebetween. The optical fibre thereby comprises a daisy-chain like array of optical fibre sensors.

The pitch of the helically wound fibre may be selected to make the optical fibre sensor or sensing section most sensitive to axial strain, hoop strain, torsional strain, or bending strain.

The or each optical fibre sensor may be helically wound having a pitch which is less than 70 times the thickness of the respective layer. The or each optical fibre sensor is thereby predominantly exposed to hoop strain, the exposure to axial strain being minimised.

A pair of optical fibre strain sensors may be provided within generally the same section of pipe, the first sensor being provided at an angle of approximately +45 degrees to the axial direction of the pipe and the second sensor being provided at an angle of approximately -45 degrees to the axial direction of the pipe. The difference in the strain detected by each sensor in the pair enables hoop strain to be decoupled from any axial strain within the pipe.

At least three optical fibre sensors may be provided, arranged in a spaced relationship around the diameter of the respective layer and extending generally in the axial direction of the pipe. Bending magnitude and direction of the pipe can thereby be determined from the different strains detected by the three sensors.

The or each optical fibre sensor may be provided on a sensor carrier, thereby forming a sensing assembly, the sensor carrier most preferably being of a composite material. The sensor carrier may comprise a carrier mat or may comprise a carrier rod. The or each optical fibre sensor may be embedded within its sensor carrier or may be provided within a groove formed on the surface of the sensor carrier.

Where an optical fibre sensor is provided within the polymer inner liner, the optical fibre sensor or the sensor carrier is preferably embedded within the polymer inner liner.

Where an optical fibre sensor is provided within the pressure armour layer, the optical fibre sensor may be provided generally axially along a wire of the pressure armour layer or, where the optical fibre sensor is provided within a sensor carrier rod, the sensor carrier rod may replace a wire of the pressure armour layer.

One or more optical fibre sensors may additionally be adapted to detect fibre darkening by optical time domain reflectometry measurement. An optical fibre sensor can thereby be used to detect ingress of water into the pipe, contact with water causing the fibre to deteriorate resulting in optical signal attenuation, and/or corrosion of metal within the pipe, contact with hydrogen gas produced during corrosion causing the fibre to deteriorate resulting in optical signal attenuation.

According to a third aspect of the invention there is provided a method of manufacturing a flexible pipe, the method comprising:
a) forming a pipe carcass;
b) forming a polymer inner liner layer around the carcass by passing the carcass through first extrusion apparatus in a which a first polymer material is melted and laid down on the carcass;
c) forming a tension armour layer around the polymer inner liner layer;
d) forming an outer sheath layer around the tension armour layer by passing the pipe through second extrusion apparatus in a which a second polymer material is melted and laid down on the tension armour layer; and
characterised in that step b) further comprises deploying an optical fibre sensor within the region of the polymer inner liner layer, such that as the layer is formed the optical fibre sensor becomes coupled to the layer.

The optical fibre sensor can thereby be coupled to the flexible pipe during the pipe manufacturing process, removing the need for any additional manufacturing stages or post-manufacture processing in order to couple the fibre sensor to the flexible pipe.

The optical fibre sensor is preferably deployed within the region to be occupied by the polymer inner liner layer to be formed and the optical fibre and the pipe are passed through the respective extrusion apparatus such that the optical fibre sensor becomes coupled to the polymer inner liner layer. The location of the optical fibre sensor may therefore be set before the polymer inner liner layer is formed, avoiding any disturbance of the material of the layer. Preferably, the optical fibre is deployed such that as the optical fibre and the pipe are passed through the respective extrusion apparatus the optical fibre sensor is encapsulated by the melted polymer material. The optical fibre sensor is thereby embedded within the polymer inner liner layer during the manufacture of the pipe.

Step b) may comprise coupling a plurality of optical fibre sensors to the polymer inner liner layer.

The or each optical fibre sensor may comprise an optical fibre adapted for distributed, semi-distributed, or multi-point strain sensing. The or each optical fibre sensor may comprise an optical fibre alternatively or additionally adapted for distributed semi-distributed, or multi-point temperature sensing. Where the or each optical fibre sensor is adapted for semi-distributed or multi-point sensing it preferably comprises an optical fibre having an array of fibre grating sensors provided therein.

Step b) preferably further comprises applying tension to the or each optical fibre sensor while the optical fibre sensor is deployed and passed through the extrusion apparatus.

The method preferably further comprises the step of providing the or each optical fibre sensor within a sensor carrier, most preferably a sensor carrier rod, before the optical fibre sensor is deployed.

Step b) preferably further comprises deploying the or each optical fibre sensor substantially centrally within the polymer inner liner layer.

One or both of steps b) and c) may further comprise moving the rotational position of the or each optical fibre sensor around the circumference of the pipe as the or each optical fibre sensor is deployed, such that the or each optical fibre sensor is helically wound around the pipe.

Embodiments of the invention will now be described in detail, by way of example only, with reference to the accompanying drawings, in which:
Figure 1 is a part-cut-away view of a flexible pipe according to a first embodiment of the invention;
Figure 2 is a diagrammatic cross-sectional view through the flexible pipe of Figure 1;
Figure 3 is a diagrammatic cross-sectional representation of the inner liner of a flexible pipe according to a second embodiment of the invention;
Figure 4 shows diagrammatic representations of a the inner liner of a flexible pipe according to a third embodiment of the invention, showing (a) a first optical fibre sensor and (b) a second optical fibre sensor;
Figure 5 is a diagrammatic cross-sectional view through a flexible pipe which does not form an embodiment of the invention, inset (a) shows a diagrammatic cross-sectional view through a first carrier rod and inset (b) shows a diagrammatic cross-sectional view through a second carrier rod;
Figure 6 illustrates vibration monitoring in the pipe of Figure 5 as a result of sea water penetrating through the pipe structure;
Figure 7 is a diagrammatic sectional views through a pipe according to a fifth embodiment of the invention; and
Figure 8 is a diagrammatic sectional view through apparatus configured to manufacture a flexible pipe according to a method according to an eighth embodiment of the invention.

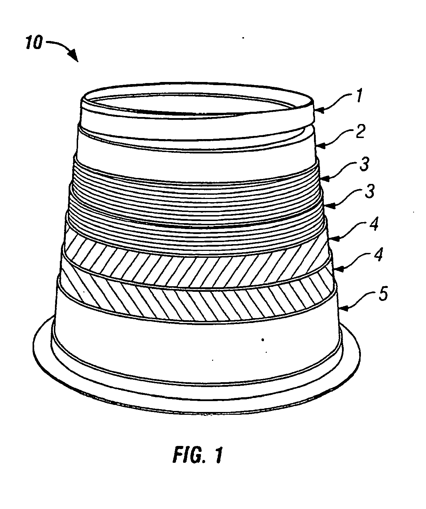

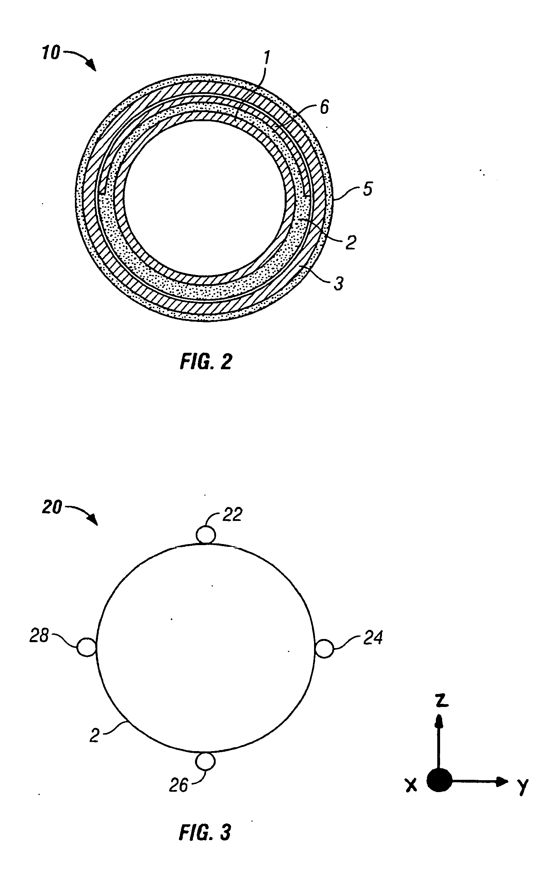

Referring to Figures 1 and 2, a first embodiment of the invention provides a flexible pipe 10 comprising a flexible carcass 1, a polymer inner liner 2, a pressure armour (or pressure vault) 3, tension armour layers 4, a polymer outer sheath 5, and a sensing assembly 6.

The carcass 1 is a metallic structure made out of interlocked metallic elements. The carcass defines a bore through which the production fluid flows. The carcass provides the pipe with its flexibility. The inner liner 2 is a polymer sheath that surrounds the carcass 1 and provides fluid isolation.

The pressure armour 3 is made out of a continuous wire wrapped around the pipe with a tight pitch (typically the pitch angle is about 88 degrees). These wires provide the pipe 10 with structural strength against the internal pressure of the production fluid.

The tension armour comprises two layers wrapped around the pipe: one layer with a positive pitch, another one with a negative one. The pitch angle can range from 25 to 55 degrees, with a typical value of around 30 degrees. The tension armour layers provide structural strength against tension and torsion stresses.

The outer sheath 5 is an external polymer layer. This layer protects the internal structure of the pipe 10 against contact with the external environment. In subsea environment, the surrounding sea water can generate significant corrosion problems. Therefore the outer sheath isolates the pipe's inner structure from the surrounding water.

Each layer of the flexible pipe 10 therefore has a different, very specific purpose and each requires a specific structural monitoring solution to enable a full assessment of the condition of the flexible pipe 10 to be made.

The sensing assembly 6 comprises a shaped mat of a composite material in which a plurality of fibre optic sensors are provided. The fibre optic sensors in this example comprise an array of 200 fibre Bragg grating (FBG) strain sensors provided in an optical fibre embedded within the sensing assembly mat. The FBGs all have substantially the same central wavelength, thereby enabling time division multiplexed (TDM) interrogation of the FBGs.

The sensing assembly 6 is coupled to the external surface of the polymer inner liner 2, as shown in Figure 2. The sensing assembly 6 may alternatively be coupled to the internal surface of the polymer inner liner 2, or may be embedded within the polymer inner liner 2.

It will be appreciated that the optical fibre containing the FBG strain sensors could alternatively be directly embedded into polymer inner liner 2 or could be provided on a surface of the polymer inner liner 2.

The sensors may be embedded into the structure of the flexible pipe during its manufacturing process, for example using the method described below. Processes such as extrusion, pultrusion, or laying of the sensor on the surface of the polymer as it cures may also be used.

A second embodiment of the invention provides a flexible pipe 20, as shown in Figure 3, which is substantially the same as the pipe 10 of Figure 1, with the following modifications. The same reference numbers are retained for corresponding features.

In this example, the fibre optic sensors comprise four optical fibres adapted for distributed tensile strain sensing 22, 24, 26, 28, each provided in a respective composite material carrier rod. The optical fibre distributed strain sensors 22, 24, 26, 28 are interrogated using Brillouin scattering measurement techniques, which will be well known to the person skilled in the art and so will not be described in detail here.

It will be appreciated that each optical fibre may alternatively be provided with an array of FBG strain sensors, to form a multi-point or semi-distributed strain sensing system. It will also be appreciated that the optical fibres may be directly coupled to, on the surface or embedded within, the polymer inner liner without using carrier rods.

The four optical fibres 22, 24, 26, 28 are provided in a substantially equally spaced arrangement around the circumference of the polymer inner liner 2. The optical fibres are utilised in two pairs: strain measurements from fibres 22 and 26 are used to determine bending of the pipe 20 in the y direction (as shown); and strain measurements from fibres 24 and 28 are used to determine bending of the pipe 20 in the z direction.

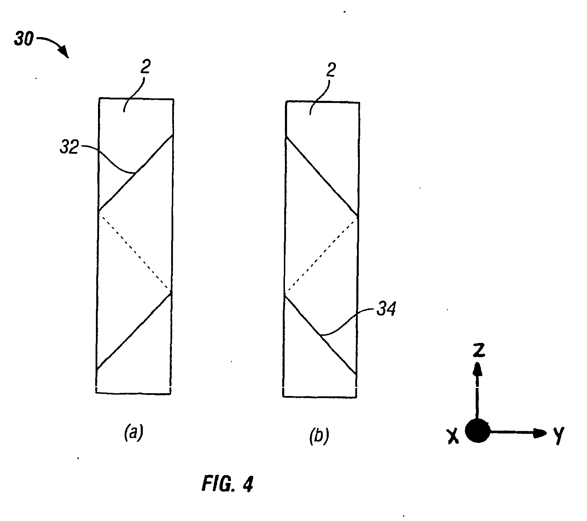

Referring to Figure 4, a third embodiment of the invention provides a flexible pipe 30, which is substantially the same as the pipe 10 of Figure 1, with the following modifications. The same reference numbers are retained for corresponding features.

In this embodiment, two optical fibre sensors 32, 34 are provided in the form of optical fibres adapted for distributed strain sensing. For clarity the two fibres are shown separately in Figure 4(a) and (b) but it will be understood that both fibres 32, 34 are provided on the same polymer inner liner 2.

The fibres 32, 34 are helically wound around the polymer inner liner 2, the first fibre 32 being wound at an angle of approximately +45 degrees to the x-axis of the pipe 30 and the second fibre 34 being wound at an angle of approximately -45 degrees to the x-axis of the pipe 30. The optical fibre distributed strain sensors 32, 34 therefore detect torsion strain within the inner liner 2.

It will be appreciated that each optical fibre may alternatively be provided with an array of FBG strain sensors, to form a multi-point or semi-distributed strain sensing system.

The embodiments of Figures 3 and 4 can be combined, to provide a flexible pipe for which bending, tensile strain, bending strain, and torsion strain can be measured, thereby enabling the shape of the flexible pipe to be determined.

The optical fibres adapted for distributed strain sensing may additionally be adapted for distributed temperature sensing, or additional optical fibres for distributed temperature sensing, using Brillouin scattering measurement, may be provided in a layer of the pipes.

Referring to Figure 1, a further embodiment of the invention may additionally comprise one or more optical fibre sensors coupled to a tension armour layer 4. The optical fibre sensors may comprise distributed strain sensors or arrays of FBG strain sensors. In this example, two tension armour layers 4 are provided, each comprising a plurality of helically wound metal wires, the wires in the two layers being wound at orientations approximately 90 degrees offset from one another. One or more of the wires of a tension armour layer 4 is replaced by a sensor carrier rod, to thereby provide for tensile strain monitoring within the tension armour 4.

In a further embodiment, flexible pipe 10 further comprises one or more additional optical fibre sensors coupled to the pressure vault layer 3. The additional optical fibre sensors may comprise distributed strain sensors or arrays of FBG strain sensors.

In a further embodiment, one or more of the optical fibre sensors may be further adapted to detect fibre darkening, or one or more additional optical fibres may be provided adapted for detecting fibre darkening, due for example to exposure to water or hydrogen gas. The fibre darkening results in attenuation of an optical signal propagating through the fibre, and the attenuation may be measured using optical time domain reflectometry (OTDR). An OTDR measurement system may be coupled to an optical fibre in addition to a TDM FBG interrogation system or a Brillouin scattering measurement system.

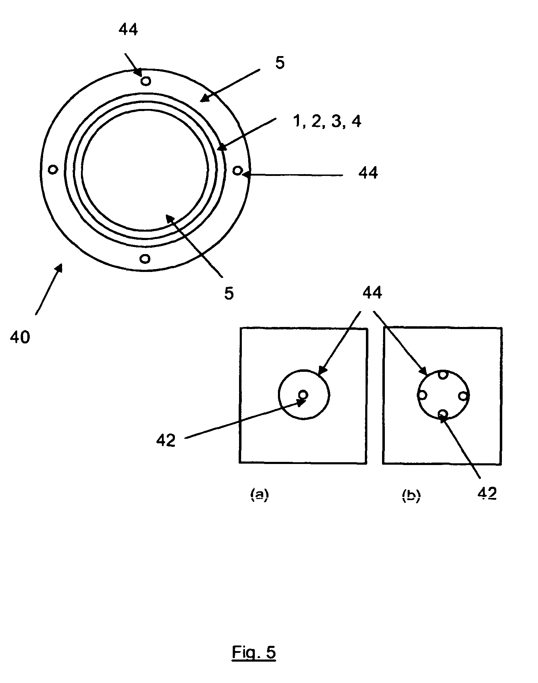

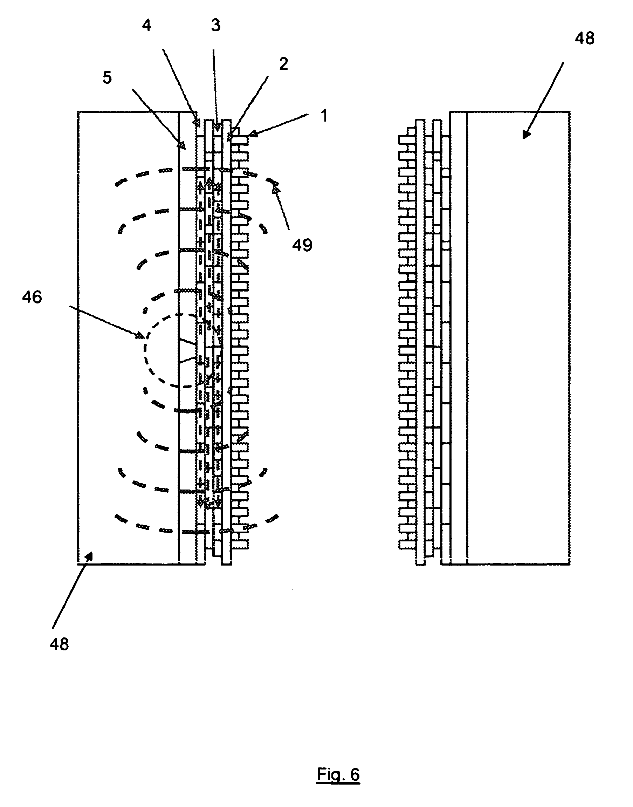

Figures 5 and 6 show a flexible pipe 40 which is substantially the same as the flexible pipe 10 of Figure 1, with the following modifications. The same reference numbers are retained for corresponding features.

Four optical fibre sensors 42, in the form of optical fibres adapted for distributed strain sensing, are embedded in the outer sheath 5. The optical fibre sensors 42 are provided within carrier rods 44, as shown in inset (a) of Figure 5.

As an alternative to a single optical fibre being provided centrally to a carrier rod 44, a set of four optical fibres 42 may be provided around a carrier rod 44, as shown in inset (b) of Figure 5.

The main goal of a flexible pipe outer sheath 5 is the protection of the pipe inner structure 1, 2, 3, 4 in order to protect it from corrosion from the surrounding water. This outer sheath is typically made out of HDPE (High Density Polyethylene). Typical thickness is in the range of 10 to 15 mm.

The main degradation mechanisms experienced by the outer sheath are initial damage during the installation and damage during the pipe lifetime due to shock, impact of objects falling from the sea surface (e.g. equipment, fishing nets caught around pipe dragging it as the fishing boat moves)

Therefore, optical fibre sensors 42 embedded in the outer sheath 5 may be used to identify and locate potential damage to the outer sheath.

The optical fibre sensors 42 may be arranged so that they extend generally straight along the axial length of the pipe 40. Alternatively, the optical fibre sensors 42 may be helically wound around the pipe 40.

The use of helically wound optical fibre sensors 42 on the pipe 40 provides a first potential advantage in that the stress on the optical fibres will be reduced. The minimum bending radius for different flexible pipes diameters is as follows:

| Diameter | Max bending radius | ΔStrain across pipe diameter |
|---|---|---|
| 8 inches (20.3 cm) | 2.5 m | 8.1e⁻² |
| 12 inches (30.5 cm) | 4 m | 7.6e⁻² |

It can be seen that bending can generate a significant amount of strain, in the range of few 10⁻². Typically, the maximum recommended strain in an optical fibre is around 10⁻². Therefore the wound configuration allows the strain in the fibre to be reduced to an acceptable level.

Another advantage is that the fibre strain sensing capabilities can be adjusted by changing the helix angle. When the fibre is helically wound around the pipe, it has a constant defined angle with the pipe axis. By changing the helix angle, the fibre can be made more sensitive to tension, Hoop, bending or torsion strain.

The fibres 42 can be coupled directly to the polymer layer 5 or can be provided in a sensor carrier, such as a carrier rod 44, with the carrier rod 44 then being coupled to the outer sheath layer 5. Each carrier rod 44 can be provided with one or several fibres, as shown in the inserts to Figure 5. The use of a carrier rod protects the fibre during its deployment and embedment in the structure.

A preferred option for the carrier rod 44 is to fabricate it from a material that matches the mechanical properties of the outer sheath 5. The process of integrating an optical fibre in polymer rod will be well known to the person skilled in the art, and is usually done either through extrusion or protrusion process.

The embedment of optical fibre sensors 42 in the outer sheath 5 structure will allow detailed assessment of the outer sheath integrity when the optical fibre sensor 42 is coupled to a sensor interrogation system. In this example, the optical fibres 42 are to be use for distributed strain sensing and a Brillouin scattering measurement system is therefore to be used to interrogate the strain sensors 42.

It will be appreciated that the optical fibres sensors 42 may also be used as distributed temperature sensors, again using a Brillouin scattering measurement system, or using a Rayleigh scattering measurement system. The distributed strain sensor may also be replaced by an optical fibre having a spaced array of fibre gratings, such as fibre Bragg gratings, provided within it, the optical fibre sensor thus being adapted for semi-distributed or multi-point strain and/or temperature sensing.

Measurements of these parameters in real time allows an estimation of the over-bending, over-tension or over-torsion that may occur during the pipe deployment or operation. Another important advantage is that the optical fibre sensors 42 enable any 'hot spots' of the monitored parameters to be identified and located.

The shape of the outer sheath 5 may also be monitored from the various strain measurements which may be made using the embedded optical fibre sensors 42.

It must be noted that in-situ measurement of strain condition is a key differentiation of the present invention compared to prior art devices. In the prior art, strain conditions are only monitored in the tension armour layer. Flexible pipes are very complex mechanical structures with complex mechanical behaviour and transfer functions. Therefore, it is very difficult to infer an estimation of outer sheath condition from strain measurements done in the tension armour without heavily relying on modelling of the structure and behaviour of the pipe. Having in-situ measurement within the outer sheath layer itself is key for accurate estimation of outer sheath mechanical conditions.

The optical fibre sensors 42 can also be used for vibration monitoring, for distributed and semi-distributed or multi-point strain sensors. Vibration measurement allows structural vibration measurement up to a few 100 kHz. Therefore it can detect high bandwidth and fast-transient events taking place on the pipe.

Vibration monitoring can be used to detect the occurrence and location of impacts on the pipe 40. It is known that one degradation mechanism suffered by subsea flexible pipes is associated with equipment falling from the surface, touching the pipe and damaging its outer sheath 5. Therefore, using the optical fibre sensors 42 adapted for vibration monitoring allows real-time monitoring and localization of shocks on the pipe 40.

Optical fibre sensors 42 adapted for vibration monitoring can also be used for the detection of leaks in the outer sheath 5. If the outer sheath of a subsea installed flexible pipe 40 becomes too damaged, sea water 48 can penetrate through the pipe structure as shown in Figure 6. Once the leak starts occurring, the water (indicated by the dashed arrows) will start invading the pipe annulus (the space between the outer sheath 5 and the inner liner 2). The annulus pressure should be at atmospheric pressure while the sea water will be at high pressure (typically 10 bars/100m) The water will undergo a strong depressurization through a limited orifice 46. This depressurization will lead to the generation of a strong noise (indicated by lines 49). Typical expected frequency range is above a few khz. Therefore, continuous and distributed monitoring of vibration allows identification of the presence and location of a leak.

A very important feature of the present invention is the ability to locate where a problem is occurring. Detection of the area that had been operated out of its initial design envelop or where it is damaged, can serve as a trigger for a more detailed inspection with more sophisticated system, such as visual inspection with an ROV (remotely operated vehicle).

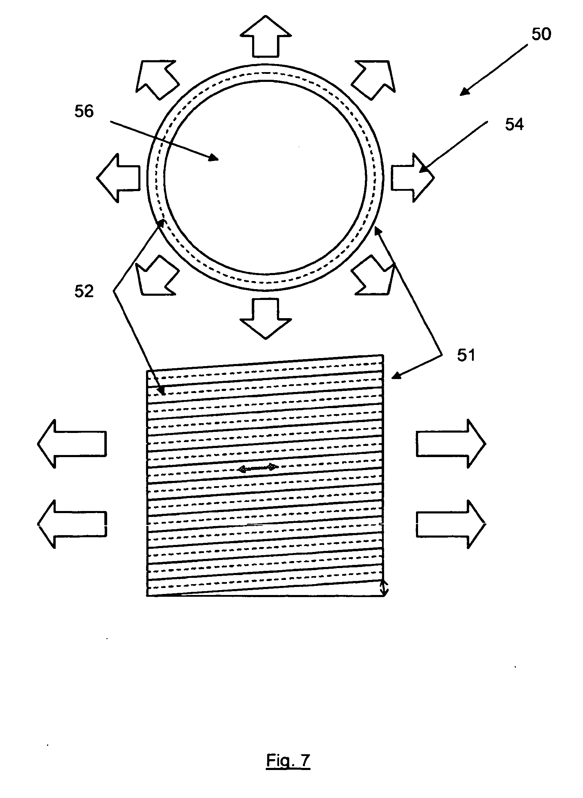

Referring to Figure 7, a fifth embodiment of the invention provides a flexible pipe 50 comprising a pressure armour layer 51.

In this embodiment, optical fibres 52 adapted for distributed strain sensing are coupled to the pressure armour layer 51. The pressure armour 51 consists of one or several wires continuously wound with a very tight pitch around the internal bore 56 of the pipe. The pressure armour wire/s absorbs the stress generated by the fluid pressure (indicated by arrows 54) inside the pipe 50.

In this example, the flexible pipe 50 is only provided with a pressure armour layer 51 around the internal bore 56, but it will be appreciated that optical fibres 52 adapted for distributed strain sensing may also be coupled to the pressure armour 3 of a more complex flexible pipe, such as that shown in Figure 1, in which the pressure armour is usually located between the inner liner 2 and the tension armour 4.

It will be appreciated that optical fibres adapted for semi-distributed or multi-point strain sensing, such as fibres provided with arrays of fibre Bragg gratings, may be used in place of the distributed strain sensing fibres 52.

Coupling optical fibres 52 to the pressure armour 3, 51 leads to the provision of unique information on the condition of use of the pipe 50.

A seventh embodiment of the invention provides a flexible pipe which is substantially the same as the flexible pipe 40 of Figure 5, with the following modifications. The same reference numbers are retained for corresponding features.

In this embodiment, the optical fibre sensors 42 are coupled to, being embedded in, the inner liner 2. The function of the inner liner 2 is fluid isolation between the pipe bore 5 and the annulus (the space between the outer sheath 5 and the inner liner 2). It is usually made out of polymer PA11 (nylon), XLPE (Cross Linked Polyethylene) or PVDF. The type of polymer will vary according to the application of the flexible pipe. Typical thickness of the inner liner is in the range of 10 to 15 mm.

Any damage in the inner liner leads to production fluid flooding in the inner liner. It must be noted that the inner liner does not form a complete seal; small quantities of gas can migrate through a un-damaged inner liner, generating a small gas flux that is usually vented at the surface through a dedicated port.

As discussed above, depending on the parameter to be measured, the optical fibres can be laid out according to different configurations, in order to maximise sensitivity to tension, torsion, hoop or bending stress in the inner liner 2.

The inner liner 2 is in direct contact with the production fluid flowing through the pipe bore 5. The optical fibre sensors 42 located in the inner liner 2 can therefore provide detailed information on the fluid properties.

The optical fibre sensors can, in particular, give an accurate estimation of fluid temperature. Most of the prior art approaches to monitoring production fluid temperature consist of embedding fibres in the pipe annulus. In order to link such temperature measurement to the actual fluid temperature, the interpretation heavily relies on a thermal model of the pipe. Due to the complexity of such a structure, the modelling is complicated and does not necessarily match very well with the reality.

The optical fibre sensors 42 embedded in the inner liner 2 give a much more accurate estimation of fluid temperature as the inner liner is in direct contact with the fluid.

Inner liner degradation can lead to catastrophic failures with production fluid flooding the pipe annulus. Preventing or locating damage of this liner is therefore very important. The main degradation mechanism of the liner is the operation temperature exceeding the design envelope. The optical fibre sensors 42 can be used to provide distributed temperature measurement, which can be used to monitor pipe operating conditions and make sure that it is operating within the design envelope. Continuous monitoring of the temperature improves managing and predicting the remaining life time of the liner.

The optical fibre sensors 42 in the inner liner 2 can be adapted for distributed vibration measurement. When an inner liner starts to leak, the production fluid invades the annulus and undergoes a strong depressurization from the bore pressure (typically a few kpsi) down to almost atmospheric pressure. This depressurization process leads to the generation of a strong noise. Distributed monitoring of vibration allows identification that a leak is occurring and its location.

The optical fibre sensors 42 can also be configured for distributed temperature measurement, which can be used to detect gas is leaking from the pipe. As gas leaks and its pressure dropped through the transition from bore to annulus, its temperature will decrease due to the Joule-Thompson effect. Therefore detecting cold points on the pipe will allow detection of leak in the liner 2.

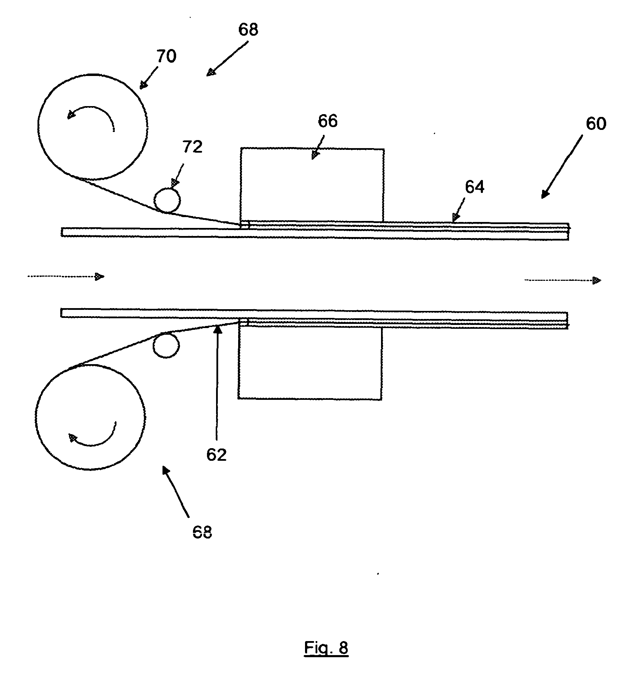

As will be understood by the person skilled in the art, an optical fibre sensor, whether a distributed sensor or an FBG sensor, can be used to detect strain or temperature, and so a single optical fibre or an array of FBG sensors can be used to detect both strain and temperature along a fibre. It is this dual parameter sensitivity of optical fibre and FBGs which allows a flexible pipe having an optical fibre sensor provided therein to detect many different parameters, simply by varying the interrogation technique applied. Referring to Figure 8, an eighth embodiment of the invention provides a method of manufacturing a flexible pipe 60 having optical fibre sensors 62 embedded within the polymer inner liner layer 64. The method may be used to manufacture the flexible pipes of the first to third and fifth embodiments.

The method comprises:
a) forming a pipe carcass;
b) forming a polymer inner liner layer 64 around the carcass by passing the carcass through a first extrusion oven 66 in a which a first polymer material is melted and laid down on the carcass, and coupling optical fibre sensors 62 to the polymer inner liner layer 64 by deploying the optical fibre sensors within the region around the carcass to be occupied by the polymer inner liner and then passing the optical fibres 62 and the pipe 60 through the extrusion oven 66 such that the optical fibre sensors 62 are encapsulated by the melted polymer material and are thereby embedded in the polymer inner liner 64;
c) forming a tension armour layer around the polymer inner liner layer; and
d) forming an outer sheath around the tension armour layer by passing the pipe 60 through a second extrusion oven in a which a second polymer material is melted and laid down on the tension armour layer.

In this example, the optical fibre sensors 62 comprise optical fibres adapted for distributed strain sensing. It will be appreciated that one or more of the optical fibre sensors may alternatively or additionally comprise an optical fibre adapted for distributed temperature sensing. Or one or more of the or each optical fibre sensors may comprise an optical fibre having an array of fibre grating sensors provided therein, the optical fibre sensor thereby being adapted for multi-point or semi-distributed strain and/or temperature sensing.

The polymer inner liner 64 is manufactured by an extrusion process. The polymer inner liner layer forms as the pipe 60 is passed through the extrusion oven 66. The extrusion oven melts the polymer and lays it down on the previous layer of the pipe 60 (ie the carcass). The polymer inner liner is usually made out of polymer PA11 (nylon), XLPE (Cross Linked Polyethylene) or PVDF. The type of polymer will vary according to the application of the flexible pipe. Typical thickness of the inner liner is in the range of 10 to 15 mm.

The polymer used for the outer sheath is usually HDPE. Its melting temperature is around 130 to 137°C. The typical thickness of the outer sheath polymer layer is 10-15mm.

Two fibre deployment units 68 are provided, comprising fibre drums 70, fibre tension control elements 72 and fibre localizers (not shown). The optical fibres 62 are stored on the fibre drums 68, which unroll and deploy the fibres 62 as the pipe 60 passes into the extrusion oven 66. The fibre tension control elements 70 are provided between the drums 68 and the extrusion oven 66, and act to pretension the optical fibres 62 as they are deployed. The fibre localizer (not shown) centralizes the fibres 62 in the region to be occupied by the polymer inner liner 64.

More than two fibre deployment units 68 can be provided to deploy a greater number of optical fibres 62 in the polymer inner liner 64. Another important feature is that the fibre deployment units 68 can be rotated about the Z axis (axis of the pipe 60) in order to wind the optical fibres 62 around the pipe 60, to give the optical fibre sensors 62 a helically wound configuration around the pipe 60, within the polymer inner liner 64.

The method may further comprise the step of providing the or each optical fibre sensor 62 within a sensor carrier rod, before the optical fibre sensors are deployed.

The optical fibre sensors may alternatively be coupled to the surface of the the inner liner, the fibre sensors being deployed such that they are partially encapsulated by the polymer inner liner layer and thereby coupled to the surface of the layer.

Various modifications may be made to the described embodiments, as follows. Where the optical fibre sensors are described as distributed strain or temperature sensors they may alternatively comprise semi-distributed or point strain or temperature sensors comprising an array of fibre gratings, such as fibre Bragg gratings, provided within an optical fibre. Where the optical fibre sensors are described as being helically wound around the pipe, they may be wound with a different pitch to that described, and the pitch may vary along the length of the pipe. In addition, where the optical fibre sensors are described as being helically wound they may comprise helically wound sensing sections interconnected by relatively straight sections of optical fibre. Where the optical fibre sensors are described as being of axial strain or torsion, the optical fibre sensors may be arranged generally straight along the axial length of the pipe or they may be helically wound. A different number and configuration of optical fibre sensors may be provided to that described.

## Claims

1. A flexible pipe (10,20, 30, 40, 50) comprising:
a polymer inner liner (2)
a tension armour layer (3) surrounding the polymer inner liner; and
an outer sheath layer (5) surrounding the tension armour layer;
and **characterised by** further comprising an optical fibre sensor (22, 24, 26, 28, 32, 34, 42, 62) coupled to the polymer inner liner.

2. A flexible pipe as claimed in claim 1, wherein the flexible pipe further comprises a pressure armour layer (4) between the inner liner layer and the tension armour layer and the optical fibre sensor (52) is coupled to at least one of the polymer inner liner and the pressure armour layer.

3. A flexible pipe as claimed in any preceding claim, wherein an optical fibre sensor is additionally coupled to the tension armour layer.

4. A flexible pipe as claimed in any preceding claim, wherein a plurality of optical fibre sensors are coupled to one or more of the said layers.

5. A flexible pipe as claimed any preceding claim, wherein the or each optical fibre sensor is coupled to the respective layer by being provided on the surface of the layer or being embedded within the layer.

6. A flexible pipe as claimed in any preceding claim, wherein the or each optical fibre sensor comprises an optical fibre adapted for distributed, semi-distributed or multi-point strain sensing.

7. A flexible pipe as claimed in any preceding claim, wherein the or each optical fibre sensor comprises an optical fibre adapted for distributed, semi-distributed or multi-point temperature sensing.

8. A flexible pipe as claimed in claims 6 or 7, wherein where the or each optical fibre sensor is adapted for semi-distributed or multi-point sensing, it comprises an optical fibre having an array of fibre grating sensors provided therein.

9. A flexible pipe as claimed in any preceding claim, wherein the or each optical fibre extends generally straight along the axial length of the flexible pipe or extends helically around the pipe.

10. A flexible pipe as claimed in any of claims 1 to 8, wherein the or each optical fibre extends helically around the pipe with a substantially constant pitch or a pitch which varies along the length of the fibre.

11. A flexible pipe as claimed in any of claims 1 to 8, wherein the or each optical fibre sensor comprises a sensing section of an optical fibre, the sensing section of the fibre being helically wound around the pipe.

12. A flexible pipe as claimed in claim 11, wherein where a plurality of optical fibre sensors are provided, the sensing sections are provided within a single optical fibre having generally straight or lower pitch interconnecting sections therebetween.

13. A flexible pipe as claimed in any of claims 10 to 12, wherein the pitch of the helically wound fibre is selected to make the optical fibre sensor or sensing section most sensitive to axial strain, hoop strain, torsional strain, or bending strain.

14. A flexible pipe as claimed in any preceding claim, wherein a pair of optical fibre strain sensors (32, 34) are provided within generally the same section of pipe, the first sensor being provided at an angle of approximately +45 degrees to the axial direction of the pipe and the second sensor being provided at an angle of approximately -45 degrees to the axial direction of the pipe.

15. A flexible pipe as claimed in any of claims 1 to 8, wherein at least three optical fibre sensors (22, 24, 26, 28) are provided, arranged in a spaced relationship around the diameter of the respective layer and extending generally in the axial direction of the pipe.

16. A flexible pipe as claimed in any preceding claim, wherein the or each optical fibre sensor is provided on a sensor carrier (6, 44).

17. A flexible pipe as claimed in claim 16, wherein the sensor carrier comprises a carrier mat (6) or a carrier rod (44) of composite material.

18. A flexible pipe as claimed in any preceding claim, wherein where an optical fibre sensor is provided within the polymer inner liner, the optical fibre sensor or the sensor carrier is embedded within the polymer inner liner.

19. A flexible pipe as claimed in any of claims 2 to 16, wherein where an optical fibre sensor is provided within the pressure armour layer, the optical fibre sensor is provided generally axially along a wire of the pressure armour layer or, where the optical fibre sensor is provided within a sensor carrier rod, the sensor carrier rod replaces a wire of the pressure armour layer.

20. A flexible pipe as claimed in any preceding claim, wherein one or more optical fibre sensors are adapted to detect fibre darkening by optical time domain reflectometry measurement.

21. A method of manufacturing a flexible pipe, the method comprising:
a) forming a pipe carcass;
b) forming a polymer inner liner layer around the carcass by passing the carcass through first extrusion apparatus in a which a first polymer material is melted and laid down on the carcass;
c) forming a tension armour layer around the polymer inner liner layer;
d) forming an outer sheath layer around the tension armour layer by passing the pipe through second extrusion apparatus in a which a second polymer material is melted and laid down on the tension armour layer;
**characterised in that** step b) further comprises deploying an optical fibre sensor within the region of the polymer inner liner layer, such that as the layer is formed the optical fibre sensor becomes coupled to the layer.

22. A method of manufacturing a flexible pipe as claimed in claim 21, wherein the optical fibre sensor is deployed within the region to be occupied by the polymer inner liner layer to be formed and the optical fibre and the pipe are passed through the respective extrusion apparatus such that the optical fibre sensor becomes coupled to the polymer inner liner layer.

23. A method of manufacturing a flexible pipe as claimed in claim 22, wherein the optical fibre is deployed and the optical fibre and the pipe are passed through the respective extrusion apparatus such that the optical fibre sensor is encapsulated by the melted polymer material and is thereby embedded within the polymer inner liner layer.

24. A method of manufacturing a flexible pipe as claimed in any of claims 21 to 23, wherein step b) may comprise coupling a plurality of optical fibre sensors to the polymer inner liner layer.

25. A method of manufacturing a flexible pipe as claimed in any of claims 21 to 24, wherein the or each optical fibre sensor comprises an optical fibre adapted for distributed, semi-distributed or multi-point strain sensing.

26. A method of manufacturing a flexible pipe as claimed in any of claims 21 to 23, wherein the or each optical fibre sensor comprises an optical fibre adapted for distributed, semi-distributed or multi-point temperature sensing.

27. A method of manufacturing a flexible pipe as claimed in claims 25 or 26, wherein where the or each optical fibre sensor is adapted for semi-distributed or multi-point sensing it comprises an optical fibre having an array of fibre grating sensors provided therein.

28. A method of manufacturing a flexible pipe as claimed in any of claims 21 to 27 wherein step b) further comprises applying tension to the or each optical fibre sensor while the optical fibre sensor is deployed and passed through the extrusion apparatus.

29. A method of manufacturing a flexible pipe as claimed in any of claims 21 to 28, wherein the method further comprises the step of providing the or each optical fibre sensor within a sensor carrier before the optical fibre sensor is deployed.

30. A method of manufacturing a flexible pipe as claimed in claim 29 wherein the sensor carrier comprises a sensor carrier rod.

31. A method of manufacturing a flexible pipe as claimed in any of claims 21 to 30, wherein step b) further comprises deploying the or each optical fibre sensor substantially centrally within the polymer inner liner layer.

32. A method of manufacturing a flexible pipe as claimed in any of claims 21 to 31, wherein one or both of steps b) and c) further comprise moving the rotational position of the or each optical fibre sensor around the circumference of the pipe as the or each optical fibre sensor is deployed, such that the or each optical fibre sensor is helically wound around the pipe.

## Patentansprüche

1. Flexibles Rohr (10, 20, 30, 40, 50), das Folgendes umfasst:
ein Polymerinnenfutter (2)
eine Spannungsschutzschicht (3), die das Polymerinnenfutter umgibt; und
eine äußere Hüllschicht (5), die die Spannungsschutzschicht umgibt;
und **dadurch gekennzeichnet, dass** es ferner einen mit dem Polymerinnenfutter gekoppelten faseroptischen Sensor (22, 24, 26, 28, 32, 34, 42, 62) umfasst.

2. Flexibles Rohr nach Anspruch 1, wobei das flexible Rohr ferner eine Druckschutzschicht (4) zwischen der Innenfutterschicht und der Spannungsschutzschicht umfasst und der faseroptische Sensor (52) mit dem Polymerinnenfutter und/oder der Druckschutzschicht gekoppelt ist.

3. Flexibles Rohr nach einem vorherigen Anspruch, wobei ein faseroptischer Sensor zusätzlich mit der Spannungsschutzschicht gekoppelt ist.

4. Flexibles Rohr nach einem vorherigen Anspruch, wobei mehrere faseroptische Sensoren mit einer oder mehreren der genannten Schichten gekoppelt sind.

5. Flexibles Rohr nach einem vorherigen Anspruch, wobei der oder jeder faseroptische Sensor mit der jeweiligen Schicht dadurch gekoppelt ist, dass er auf der Oberfläche der Schicht angeordnet oder in der Schicht eingebettet ist.

6. Flexibles Rohr nach einem vorherigen Anspruch, wobei der oder jeder faseroptische Sensor eine optische Faser umfasst, die zum verteilten, semi-verteilten oder Mehrpunkt-Dehnungsmessen ausgelegt ist.

7. Flexibles Rohr nach einem vorherigen Anspruch, wobei der oder jeder faseroptische Sensor eine optische Faser umfasst, die zum verteilten, semi-verteilten oder Mehrpunkt-Temperaturmessen ausgelegt ist.

8. Flexibles Rohr nach Anspruch 6 oder 7, wobei der oder jeder faseroptische Sensor, wenn er zum semi-verteilten oder Mehrpunktmessen ausgelegt ist, eine optische Faser mit einer Anordnung von Fasergittersensoren darin umfasst.

9. Flexibles Rohr nach einem vorherigen Anspruch, wobei die oder jede optische Faser allgemein gerade über die axiale Länge des flexiblen Rohrs oder spiralförmig um das Rohr verläuft.

10. Flexibles Rohr nach einem der Ansprüche 1 bis 8, wobei die oder jede optische Faser spiralförmig um das Rohr mit einer im Wesentlichen konstanten Steigung oder einer über die Länge der Faser variierenden Steigung verläuft.

11. Flexibles Rohr nach einem der Ansprüche 1 bis 8, wobei der oder jeder faseroptische Sensor einen Messabschnitt einer optischen Faser umfasst, wobei der Messabschnitt der Faser spiralförmig um das Rohr gewunden ist.

12. Flexibles Rohr nach Anspruch 11, wobei die Messabschnitte, wenn mehrere faseroptische Sensoren vorgesehen sind, in einer einzigen optischen Faser mit Verbindungsabschnitten dazwischen versehen sind, die allgemein gerade sind oder eine geringere Steigung haben.

13. Flexibles Rohr nach einem der Ansprüche 10 bis 12, wobei die Steigung der spiralförmig gewundenen Faser so gewählt ist, dass der faseroptische Sensor oder Messabschnitt für axiale Dehnung, Ringbeanspruchung, Torsionsbeanspruchung oder Biegebeanspruchung am empfindlichsten wird.

14. Flexibles Rohr nach einem vorherigen Anspruch, wobei ein Paar faseroptischer Dehnungssensoren (32, 34) allgemein im selben Rohrabschnitt vorgesehen sind, wobei der erste Sensor in einem Winkel von etwa +45 Grad zur axialen Richtung des Rohrs vorgesehen ist und der zweite Sensor in einem Winkel von etwa -45 Grad zur axialen Richtung des Rohrs vorgesehen ist.

15. Flexibles Rohr nach einem der Ansprüche 1 bis 8, wobei wenigstens drei faseroptische Sensoren (22, 24, 26, 28) vorgesehen sind, die in einer beabstandeten Beziehung um den Durchmesser der jeweiligen Schicht angeordnet sind und allgemein in axialer Richtung des Rohrs verlaufen.

16. Flexibles Rohr nach einem vorherigen Anspruch, wobei der oder jeder faseroptische Sensor auf einem Sensorträger (6, 44) vorgesehen ist.

17. Flexibles Rohr nach Anspruch 16, wobei der Sensorträger eine Trägermatte (6) oder einen Trägerstab (44) aus Verbundmaterial umfasst.

18. Flexibles Rohr nach einem vorherigen Anspruch, wobei, wenn ein faseroptischer Sensor in dem Polymerinnenfutter vorgesehen ist, der faseroptische Sensor oder der Sensorsträger in dem Polymerinnenfutter eingebettet ist.

19. Flexibles Rohr nach einem der Ansprüche 2 bis 16, wobei der faseroptische Sensor, wenn er in der Druckschutzschicht vorgesehen ist, allgemein axial entlang dem Draht der Druckschutzschicht verläuft, oder wenn er in einem Sensorträgerstab vorgesehen ist, der Sensorträgerstab einen Draht der Druckschutzschicht ersetzt.

20. Flexibles Rohr nach einem vorherigen Anspruch, wobei ein oder mehrere faseroptische Sensoren zum Erkennen einer Faserverdunkelung durch optische Zeitdomänen-Reflektometriemessung ausgelegt sind.

21. Verfahren zur Herstellung eines flexiblen Rohrs, wobei das Verfahren Folgendes beinhaltet:
a) Bilden einer Rohrkarkasse;
b) Bilden einer Polymerinnenfutterschicht um die Karkasse durch Leiten der Karkasse durch eine erste Extrusionsvorrichtung, in der ein erstes Polymermaterial geschmolzen und auf der Karkasse abgelegt wird;
c) Bilden einer Spannungsschutzschicht um die Polymerinnenfutterschicht;
d) Bilden einer äußeren Hüllschicht um die Spannungsschutzschicht durch Leiten des Rohrs durch eine zweite Extrusionsvorrichtung, in der ein zweites Polymermaterial geschmolzen und auf der Spannungsschutzschicht abgelegt wird;
**dadurch gekennzeichnet, dass** Schritt b) ferner das Einsetzen eines faseroptischen Sensors in der Region der Polymerinnenfutterschicht beinhaltet, so dass der faseroptische Sensor beim Bilden der Schicht mit der Schicht gekoppelt wird.

22. Verfahren zur Herstellung eines flexiblen Rohrs nach Anspruch 21, wobei der faseroptische Sensor in der Region eingesetzt wird, die von der zu bildenden Polymerinnenfutterschicht der optischen Faser eingenommen werden soll, und die optische Faser und das Rohr durch die jeweilige Extrusionsvorrichtung geleitet werden, so dass der faseroptische Sensor mit der Polymerinnenfutterschicht gekoppelt wird.

23. Verfahren zur Herstellung eines flexiblen Rohrs nach Anspruch 22, wobei die optische Faser eingesetzt wird und die optische Faser und das Rohr durch die jeweilige Extrusionsvorrichtung geleitet werden, so dass der faseroptische Sensor von dem geschmolzenen Polymermaterial eingekapselt und dadurch in der Polymerinnenfutterschicht eingebettet wird.

24. Verfahren zur Herstellung eines flexiblen Rohrs nach einem der Ansprüche 21 bis 23, wobei Schritt b) das Koppeln mehrerer faseroptischer Sensoren mit der Polymerinnenfutterschicht beinhalten kann.

25. Verfahren zur Herstellung eines flexiblen Rohrs nach einem der Ansprüche 21 bis 24, wobei der oder jeder faseroptische Sensor eine optische Faser umfasst, die für verteiltes, semi-verteiltes oder Mehrpunkt-Dehnungsmessen ausgelegt ist.

26. Verfahren zur Herstellung eines flexiblen Rohrs nach einem der Ansprüche 21 bis 23, wobei der oder jeder faseroptische Sensor eine optische Faser umfasst, die für verteiltes, semi-verteiltes oder Mehrpunkt-Temperaturmessen ausgelegt ist.

27. Verfahren zur Herstellung eines flexiblen Rohrs nach Anspruch 25 oder 26, wobei der oder jeder faseroptische Sensor, wenn er für semi-verteiltes oder Mehrpunktmessen ausgelegt ist, eine optische Faser mit einer Anordnung von Fasergittersensoren darin umfasst.

28. Verfahren zur Herstellung eines flexiblen Rohrs nach einem der Ansprüche 21 bis 27, wobei Schritt b) ferner das Beaufschlagen des oder jedes faseroptischen Sensors mit einer Spannung beinhaltet, während der faseroptische Sensor eingesetzt und durch die Extrusionsvorrichtung geleitet wird.

29. Verfahren zur Herstellung eines flexiblen Rohrs nach einem der Ansprüche 21 bis 28, wobei das Verfahren ferner den Schritt des Anordnens des oder jedes faseroptischen Sensors in einem Sensorträger vor dem Einsetzen des faseroptischen Sensors beinhaltet.

30. Verfahren zur Herstellung eines flexiblen Rohrs nach Anspruch 29, wobei der Sensorträger einen Sensorträgerstab umfasst.

31. Verfahren zur Herstellung eines flexiblen Rohrs nach einem der Ansprüche 21 bis 30, wobei Schritt b) ferner das Einsetzen des oder jedes faseroptischen Sensors im Wesentlichen zentral in der Polymerinnenfutterschicht beinhaltet.

32. Verfahren zur Herstellung eines flexiblen Rohrs nach einem der Ansprüche 21 bis 31, wobei Schritt b) und/oder Schritt c) ferner das Bewegen der Drehposition des oder jedes faseroptischen Sensors um den Umfang des Rohrs beim Einsetzen des oder jedes faseroptischen Sensors beinhaltet, so dass der oder jeder faseroptische Sensor spiralförmig um das Rohr gewickelt wird.

## Revendications

1. Un tuyau flexible (10, 20, 30, 40, 50) comprenant :
un revêtement intérieur en polymère (2)
une couche de blindage de tension (3) enveloppant le revêtement intérieur en polymère, et
une couche de gaine extérieure (5) enveloppant la couche de blindage de tension,
et **caractérisé en ce qu'**il comprend en outre un capteur à fibre optique (22, 24, 26, 28, 32, 34, 42, 62) couplé au revêtement intérieur en polymère.

2. Un tuyau flexible selon la Revendication 1, où le tuyau flexible comprend en outre une couche de blindage de pression (4) entre la couche de revêtement intérieur et la couche de blindage de tension, et le capteur à fibre optique (52) est couplé à au moins un élément parmi le revêtement intérieur en polymère et la couche de blindage de pression.

3. Un tuyau flexible selon l'une quelconque des Revendications précédentes, où un capteur à fibre optique est également couplé à la couche de blindage de tension.

4. Un tuyau flexible selon l'une quelconque des Revendications précédentes, où une pluralité de capteurs à fibre optique sont couplés à une ou plusieurs desdites couches.

5. Un tuyau flexible selon l'une quelconque des Revendications précédentes, où le ou chaque capteur à fibre optique est couplé à la couche respective en étant placé sur la surface de la couche ou en étant imbriqué à l'intérieur de la couche.

6. Un tuyau flexible selon l'une quelconque des Revendications précédentes, où le ou chaque capteur à fibre optique comprend une fibre optique adaptée à une détection de contrainte répartie, semi-répartie ou multipoint.

7. Un tuyau flexible selon l'une quelconque des Revendications précédentes, où le ou chaque capteur à fibre optique comprend une fibre optique adaptée à une détection de température répartie, semi-répartie ou multipoint.

8. Un tuyau flexible selon l'une quelconque des Revendications 6 ou 7, où, lorsque le ou chaque capteur à fibre optique est adapté à une détection semi-répartie ou multipoint, il comprend une fibre optique possédant une matrice de capteurs à réseau de fibres placée dans celle-ci.

9. Un tuyau flexible selon l'une quelconque des Revendications précédentes, où le ou chaque fibre optique s'étend de manière généralement rectiligne le long de la longueur axiale du tuyau flexible ou s'étend de manière hélicoïdale autour du tuyau.

10. Un tuyau flexible selon l'une quelconque des Revendications 1 à 8, où le ou chaque fibre optique s'étend de manière hélicoïdale autour du tuyau avec un pas sensiblement constant ou un pas qui varie le long de la longueur de la fibre.

11. Un tuyau flexible selon l'une quelconque des Revendications 1 à 8, où le ou chaque capteur à fibre optique comprend une section de détection d'une fibre optique, la section de détection de la fibre étant enroulée de manière hélicoïdale autour du tuyau.

12. Un tuyau flexible selon la Revendication 11, où, lorsqu'une pluralité de capteurs à fibre optique sont fournis, les sections de détection sont placées à l'intérieur d'une fibre optique unique possédant des sections d'interconnexion de pas généralement rectilignes ou inférieures entre elles.

13. Un tuyau flexible selon l'une quelconque des Revendications 10 à 12, où le pas de la fibre enroulée de manière hélicoïdale est sélectionné de façon à rendre le capteur à fibre optique ou la section de détection particulièrement sensible à une contrainte axiale, une contrainte circonférentielle, une contrainte de torsion ou une contrainte de flexion.

14. Un tuyau flexible selon l'une quelconque des Revendications précédentes, où une paire de capteurs de contrainte à fibre optique (32, 34) sont placés généralement à l'intérieur de la même section de tuyau, le premier capteur étant situé au niveau d'un angle d'approximativement +45 degrés par rapport à la direction axiale du tuyau et le deuxième capteur étant situé au niveau d'un angle d'approximativement -45 degrés par rapport à la direction axiale du tuyau.

15. Un tuyau flexible selon l'une quelconque des Revendications 1 à 8, où au moins trois capteurs à fibre optique (22, 24, 26, 28) sont fournis, agencés dans une relation espacée autour du diamètre de la couche respective et s'étendant généralement dans la direction axiale du tuyau.

16. Un tuyau flexible selon l'une quelconque des Revendications précédentes, où le ou chaque capteur à fibre optique est placé sur un support de capteur (6, 44).

17. Un tuyau flexible selon la Revendication 16, où le support de capteur comprend un tapis de support (6) ou une tige de support (44) de matériau composite.

18. Un tuyau flexible selon l'une quelconque des Revendications précédentes, où, lorsqu'un capteur à fibre optique est placé à l'intérieur du revêtement intérieur en polymère, le capteur à fibre optique ou le support de capteur est imbriqué à l'intérieur du revêtement intérieur en polymère.

19. Un tuyau flexible selon l'une quelconque des Revendications 2 à 16, où, lorsqu'un capteur à fibre optique est placé à l'intérieur de la couche de blindage de pression, le capteur à fibre optique est placé généralement axialement le long d'un fil de la couche de blindage de pression ou, lorsque le capteur à fibre optique est placé à l'intérieur d'une tige de support de capteur, la tige de support de capteur remplace un fil de la couche de blindage de pression.

20. Un tuyau flexible selon l'une quelconque des Revendications précédentes, où un ou plusieurs capteurs à fibre optique sont adaptés de façon à détecter un assombrissement de fibre par une mesure réflectométrique du domaine temporel optique.

21. Un procédé de fabrication d'un tuyau flexible, le procédé comprenant :
a) la formation d'une armature de tuyau,
b) la formation d'une couche de revêtement intérieur en polymère autour de l'armature en faisant passer l'armature au travers d'un premier appareil d'extrusion dans lequel un premier matériau polymère est fondu et déposé sur l'armature,
c) la formation d'une couche de blindage de tension autour de la couche de revêtement intérieur en polymère,
d) la formation d'une couche de gaine extérieure autour de la couche de blindage de tension en faisant passer le tuyau au travers d'un deuxième appareil d'extrusion dans lequel un deuxième matériau polymère est fondu et déposé sur la couche de blindage de tension,
**caractérisé en ce que** l'opération b) comprend en outre le déploiement d'un capteur à fibre optique à l'intérieur de la zone de la couche de revêtement intérieur en polymère, de sorte que, au moment où la couche est formée, le capteur à fibre optique se couple à la couche.

22. Un procédé de fabrication d'un tuyau flexible selon la Revendication 21, où le capteur à fibre optique est déployé à l'intérieur de la zone à occuper par la couche de revêtement intérieur en polymère à former, et la fibre optique et le tuyau sont passés au travers de l'appareil d'extrusion respectif de sorte que le capteur à fibre optique se couple à la couche de revêtement intérieur en polymère.

23. Un procédé de fabrication d'un tuyau flexible selon la Revendication 22, où la fibre optique est déployée et la fibre optique et le tuyau sont passés au travers de l'appareil d'extrusion respectif de sorte que le capteur à fibre optique soit encapsulé par le matériau polymère fondu et soit ainsi imbriqué à l'intérieur de la couche de revêtement intérieur en polymère.

24. Un procédé de fabrication d'un tuyau flexible selon l'une quelconque des Revendications 21 à 23, où l'opération b) peut comprendre le couplage d'une pluralité de capteurs à fibre optique à la couche de revêtement intérieur en polymère.

25. Un procédé de fabrication d'un tuyau flexible selon l'une quelconque des Revendications 21 à 24, où le ou chaque capteur à fibre optique comprend une fibre optique adaptée à une détection de contrainte répartie, semi-répartie ou multipoint.

26. Un procédé de fabrication d'un tuyau flexible selon l'une quelconque des Revendications 21 à 23, où le ou chaque capteur à fibre optique comprend une fibre optique adaptée à une détection de température répartie, semi-répartie ou multipoint.

27. Un procédé de fabrication d'un tuyau flexible selon l'une quelconque des Revendications 25 ou 26, où, lorsque le ou chaque capteur à fibre optique est adapté à une détection semi-répartie ou multipoint, il comprend une fibre optique possédant une matrice de capteurs à réseau de fibres placée dans celle-ci.

28. Un procédé de fabrication d'un tuyau flexible selon l'une quelconque des Revendications 21 à 27 où l'opération b) comprend en outre l'application d'une tension au capteur ou à chaque capteur à fibre optique pendant que le capteur à fibre optique est déployé et passé au travers de l'appareil d'extrusion.

29. Un procédé de fabrication d'un tuyau flexible selon l'une quelconque des Revendications 21 à 28, où le procédé comprend en outre l'opération d'installation du ou de chaque capteur à fibre optique à l'intérieur d'un support de capteur avant que le capteur à fibre optique ne soit déployé.

30. Un procédé de fabrication d'un tuyau flexible selon la Revendication 29 où le support de capteur comprend une tige de support de capteur.

31. Un procédé de fabrication d'un tuyau flexible selon l'une quelconque des Revendications 21 à 30, où l'opération b) comprend en outre le déploiement du ou de chaque capteur à fibre optique de manière sensiblement centrale à l'intérieur de la couche de revêtement intérieur en polymère.

32. Un procédé de fabrication d'un tuyau flexible selon l'une quelconque des Revendications 21 à 31, où l'une quelconque ou les deux opérations b) et c) comprennent en outre le déplacement de la position de rotation du ou de chaque capteur à fibre optique autour de la circonférence du tuyau au moment où le ou chaque capteur à fibre optique est déployé, de sorte que le ou chaque capteur à fibre optique soit enroulé de manière hélicoïdale autour du tuyau.
